# EUROPEAN PATENT SPECIFICATION

(11) **EP 1 553 816 B1**
(45) Date of publication and mention of the grant of the patent: **21.11.2007**
(21) Application number: 03759071.8
(22) Date of filing: 10.10.2003
(51) Int. Cl.: A01G 9/24

(54) **METHOD OF REMOVING WARM AND/OR MOIST AIR FROM AN AT LEAST PARTIALLY CLOSED GREENHOUSE**
VERFAHREN ZUM ENTZIEHEN VON WARMER UND/ODER FEUCHTER LUFT AUS EINEM ZUMINDEST TEILWEISE GESCHLOSSENEM GEWÄCHSHAUS
PROCEDE D'ELIMINATION DE L'AIR CHAUD ET/OU HUMIDE D'UNE SERRE AU MOINS PARTIELLEMENT FERMEE

(30) Priority: 10.10.2002 NL 1021628; 15.05.2003 NL 1023434
(43) Date of publication of application: 20.07.2005
(73) Proprietor: Econcern B.V., 3526 KL Utrecht (NL)
(72) Inventor: SCHOONDERBEEK, Gilbertus, Gualtherus, NL-3551 AC Utrecht (NL); OPDAM, Joannes, Jozef, Geradus, NL-1075 BW Amsterdam (NL); HELLER, Ellen, Mathilde, Barbara, NL-3524 BA Utrecht (NL)
(74) Representative: Kupecz, Arpad
(86) International application number: PCT/NL2003/000689
(87) International publication number: WO 2004/032606

(56) References cited:
- DE-A- 2 622 479
- DE-A- 2 721 434
- US-A- 3 691 928
- DATABASE WPI Section PQ, Week 198831 Derwent Publications Ltd., London, GB; Class P13, AN 1988-218522 XP002267749 & SU 1 366 115 A (KUZNETSOV A V) 15 January 1988 (1988-01-15)
- VAN PAASSEN A.H.C. ET AL.: "Verdampingskoeling voor tuinbouwkassen" KLIMAAT BEHEERSING., vol. 21, no. 6, June 1992 (1992-06), pages 165-172, XP0008026790 NLC.MISSET B.V. DOETINCHEM. cited in the application

## Description

The present invention relates to a method for the forced removal of warm and/or humid air from a greenhouse, which greenhouse is provided with
- a closable outlet opening for the discharge of said warm and/or humid air,
- a closable inlet opening for the supply of outside air,
- a ventilator unit, and
- a duct connected to the ventilator unit and extending into the greenhouse, which duct is over its length provided with openings
wherein during normal operation of the greenhouse the ventilator unit is employed to cause air in the greenhouse to circulate, in order to maintain desirable climate conditions in the greenhouse and
- for the forced removal of warm and/or humid air the closable inlet opening and the closable outlet opening are opened,
- with the aid of the ventilator unit, outside air is introduced into the greenhouse via the inlet opening and via the duct in the greenhouse, thus expelling the warm and/or humid air from the greenhouse through the opened outlet opening.

Such a method is described by Van Paassen, A.H.C. et al in Klimaatbeheersing 21 pp. 165-172 (1992) as a method for the mechanic ventilation of a greenhouse. Herein, in order to remove warm and/or humid air from the greenhouse, an air slide valve provided with a shut-off element in front of the inlet opening for outside air is moved from a first position to a second position, thereby opening the inlet opening and drawing in outside air with which the warm and/or humid air is expelled from the greenhouse.

German patent application with publication no. DE-A 27 21 434, which forms the closest prior art for the present invention, also discloses a method for the forced removal of warm/humid air from a greenhouse. According to this publication, said greenhouse comprises closable outlet and inlet openings, a ventilator and a duct with openings.

It is the aim in agriculture and market gardening, to use semiclosed or closed greenhouses in order to allow the climate in which the crop to be grown is cultivated to be adjusted most advantageously. For example, in a (semi)closed greenhouse it is possible to raise the CO₂ content in the air, by which means the yield can be increased. Even more than a conventional greenhouse, a (semi)closed greenhouse works like a rather effective solar collector. For maintaining a desirable temperature, a (semi)closed greenhouse is therefore provided with a cooling arrangement for the removal of heat and/or for drawing in cold. A big problem is that, for example due to certain weather conditions, the temperature in the greenhouse rises considerably and the cooling arrangement has insufficient capacity. This may also occur due to a technical failure of, for example, the cooling arrangement. In combination with or without a high humidity, this may result in a damaged crop, and even in a los of the entire harvest. For a market gardener this is an unacceptable risk. With the prior art arrangement it is not possible to expel the warm and/or humid air sufficiently quickly and effectively from the (semi)closed greenhouse, since it is provided with fewer closable windows for the removal of heat and/or humidity, which after all lowers the capital outlay. The second reason why there is a more serious problem with a (semi)closed greenhouse than with conventional greenhouses, is that the former possesses fewer or no closable windows whose frames block out the light. In other words, more sunlight is able to shine into a (semi)closed greenhouse so that the problem, in comparison with a conventional greenhouse, is exacerbated.

The object of the present invention is to provide a method by which it is possible to reduce the risk of damage or loss of the crop in a (semi)closed greenhouse.

To this end the method according to the invention is characterised in that the duct downstream in relation to the ventilator unit is provided with at least one passage opening that can be opened, and that for the purpose of removing warm and/or humid air, the passage opening(s) that can be opened are opened so as to increase the total area of openings in the duct and the open passage opening(s) by at least 20 %.

By increasing the total area the flow resistance is reduced and the flow rate can be increased. It is therefore not necessary to increase the capacity or the number of the ventilator unit(s).

In the present application a (semi)closed greenhouse is understood to be a (semi)closed or closed greenhouse provided with an arrangement for cooling the greenhouse. Preferably at least part of the cooling capacity is provided by a cooling arrangement that does not introduce any humidity into the greenhouse. The cooling arrangement is preferably a cooling arrangement which does not introduce any humidity at all or, better still, is even capable of removing humidity from the air. This may be achieved by using a cooling arrangement comprising a heat exchanger. The cooling arrangement may be located outside the actual greenhouse (for example in the form of a sprinkler spraying water over the top of the greenhouse), it may be located partly inside the greenhouse, such as a heat exchanger connected to a cold aquifer, or may be located entirely in the greenhouse. As known in the art, even a closed greenhouse will in practice not be hermetically sealed from its surroundings so as to compensate air pressure differences between the greenhouse and the atmosphere. The greenhouse is, however, closed to the extent that there are no openings allowing free access to any pests. The term "duct" in the context of the present application denotes any means used to distribute air from the ventilator unit over a crop. The duct is, for example, a cylindrical tube, which is provided at regular intervals with openings. The duct may also be formed by culture tables, which are provided with side walls extending towards the floor, with the top side of the duct being formed by the bottom of the culture table (upon which the plants are placed), and the bottom side of the duct being formed by the floor upon which the culture table stands. The bottom of the culture table is provided with openings for the distribution of air over the crop. The passage openings that can be opened are provided, for example, in the side walls. In the case of greenhouses with optimal area utilisation, wherein plants are placed on conveyors, for example in the form of adjacent conveyor belts, these substantially continuous conveyors may form the top side of a duct, which duct is very wide in comparison with the height. In such a case the side walls may be of less importance and may even be absent, although in general, this option will not be preferred for an optimal (quick and complete) expulsion of the warm and/or humid air. The surface area is preferably increased by at least 50 %, such as at least 100 % and even more preferably at least 150 % compared with the area of solely the openings in the longitudinal direction of the duct during normal operation. The surface area may also be increased by enlarging the holes already present in the duct or by allowing a greater degree of free passage through them. The openings of the duct may be partially covered, which partial covering may be removed at least in part.

The end of the duct furthest removed from the ventilator unit is preferably provided with a shut-off member, which shut-off member is opened for the forced removal of said warm and/or humid air.

In this way outside air can be supplied through the ventilator unit at lowered resistance. Also, because a large amount of outside air is emitted at the distal end of the duct, this place of emission may contribute to warm and/or humid air being expelled from the closed greenhouse effectively and quickly.

For the simple and failure-free unblocking of the outlet opening and the inlet opening, the outlet opening and the inlet opening of the (semi)closed green house are, in accordance with a preferred embodiment, simultaneously opened by a mechanical coupling between respective shut-off elements.

The method according to the present invention may be realised in different ways, among others by using a tubular air slide valve, as described by Van Paassen et al. By moving the air slide valve toward the wall of the greenhouse, a shut-off element in front of the inlet opening closing this inlet opening off from the outside and connected with the air slide valve, is moved away from the greenhouse wall, and thus unblocks the inlet opening. The tubular air slide valve connects to the inlet opening. This prevents the ventilator unit drawing in air from the greenhouse, so that only outside air is introduced into the greenhouse. Although it is preferred to use an embodiment where the ventilator unit is fixed, alternative embodiments are possible. A first embodiment is characterised in that the ventilator unit is positioned near but at a distance from a wall of the greenhouse and the inlet opening is provided with a shut-off element, wherein for the forced removal of said warm and/or humid air, the shut-off element is moved from a first position closing off the inlet opening to a second position unblocking the inlet opening, in which second position of the shut-off element the flow of air from the greenhouse to the ventilator unit is impeded, and outside air is introduced through the ventilator unit via the duct into the greenhouse.

Under normal circumstances, this variant does not require the ventilator unit to be in direct contact with the wall of the greenhouse, whereas if warm and/or humid air needs to be expelled from the greenhouse, recirculation of the air from the greenhouse is impeded, so that the removal of the warm and/or humid air is already fairly efficient. This can be achieved by turning the shut-off element (rotating about a horizontal axis running parallel to the greenhouse wall and located at the top side of the inlet opening and at the height of the top side of the ventilator unit), which during normal operation shuts off the inlet opening. In the turned state, the shut-off element.

A preferred embodiment of this is characterised in that the inlet opening is located in the side wall of the greenhouse, the shut-off element is a plate rotatable about a horizontal axis, wherein for the forced removal of said warm and/or humid air the plate is moved from a first relatively vertical position closing off the inlet opening, to a second relatively horizontal position unblocking the opening such that the distal end of the plate is at the height of the top side of the ventilator unit and thus impedes the flow of air from the greenhouse to the ventilator unit, and outside air is introduced through the ventilator unit via the duct into the greenhouse.

For the forced removal of the said warm and/or humid air, the ventilator of the ventilator unit is in accordance with an alternative embodiment turned from a first position, in which the ventilator unit draws in air from the greenhouse to a second position, in which the ventilator unit draws in air from outside the greenhouse.

In such a case it is preferred for the ventilator unit and the duct to be connected via a flexible duct section, which duct section by turning the ventilator unit from a first to a second position is bent, thereby ensuring that outside air is supplied via the duct into the greenhouse.

This guarantees an effective supply of air to the duct.

For the forced removal of said warm and/or humid air, the ventilator of the ventilator unit is, in accordance with still another embodiment, moved from a first position wherein the ventilator unit draws in air from the greenhouse, to a second position contacting the wall of the greenhouse, wherein the ventilator unit draws in air from outside the greenhouse.

In such a case the ventilator can be brought into a condition with high potential energy, and a safeguard can be removed before the removal of warm and/or humid air, so that the ventilator automatically moves from the first position to the second position. This is a technically simple and reliable method of connecting the ventilator unit with the outside air.

In this case also the ventilator unit and the duct are connected via a flexible duct section, wherein by sliding the ventilator unit from a first to a second position, the duct section is extended to ensure that outside air is supplied via the duct into the greenhouse.

For the reliable and cheap implementation of the method according to the invention, the method according to the invention is characterised in that during normal operation at least one element selected from i) the ventilator, and ii) a shut-off element for an inlet opening or outlet opening is in a condition with high potential energy, and that for the forced removal of warm and/or humid air a stop is removed, and the force of gravity causes the element to be turned or moved.

An important advantage of a closed greenhouse is that a crop is not, or much less easily accessible to pests but, if the entire harvest is at stake due to climatic conditions, the supply of outside air will nevertheless be favoured. However, according to a preferred embodiment the outside air is supplied via the inlet opening, which is provided with means for preventing the entry of organisms that might constitute a pest.

Such means are, for example, a fine-meshed net, preferably tapered and/or pleated (like a coffee filter) for enlarging the total air-permeable surface in order to minimise the flow resistance which would limit the supply of air to the greenhouse. Another possibility is the use of means based on a cyclone, wherein due to centrifugal forces pest organisms such as flies and the like are slung against the wall of the cyclone. The wall of the cyclone may optionally be provided with a sticky liquid, such as a liquid based on sugar and/or starch, to which the organisms adhere. In order to catch particles from the air it is also possible to spray drops of liquid, in particular sticky liquid, with the air being supplied.

The present invention will now be elucidated with reference to the drawing, in which

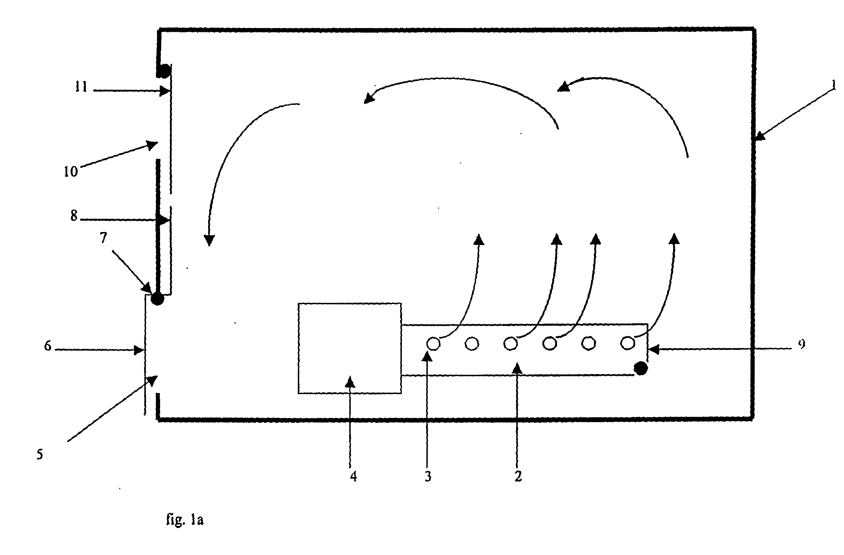

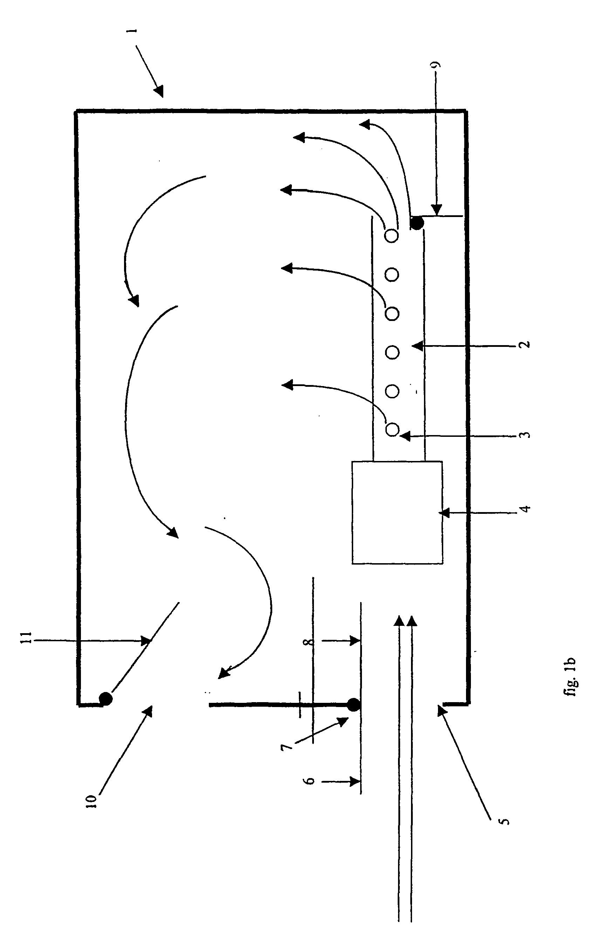

Figs. 1a and b schematically show a first apparatus for applying the method according to the invention, wherein a shut-off element unblocks an inlet opening in a closed greenhouse.

The method according to the invention will now be elucidated with reference to Fig. 1 wherein a greenhouse 1 is shown provided with duct 2, which duct is provided over its length with openings 3 (having a diameter of 1 cm). The surface of the openings is 80 cm²/m. The diameter of the duct 2 is 80 cm and the length is 100 m. In a greenhouse such ducts 2 are provided, for example, every 1.60 m and Fig. 1 shows only 1.

The greenhouse 1 shown is a closed greenhouse. It comprises a cooling arrangement, which is not shown.

At the first end of the duct 2 there is a ventilator unit 4 having a capacity of 2 kW. The ventilator unit 4 is placed at a distance from an inlet opening 5 in a wall of the greenhouse 1. The inlet opening 5 is shut off by a shutter 6, shown in Fig. 1a in a closed condition and in Fig. 1b in an unblocked, open condition. The condition shown in Fig. 1a is the normal condition, wherein the ventilator unit 4 is used for circulating air present in the greenhouse (arrows indicate the air flow). In the abnormal event of the cooling arrangement being incapable of maintaining the temperature and/or air humidity at the desired level, the function of the ventilator unit is changed as shown in Fig. 1b. The inlet opening 5 is opened by turning the shutter 6 about an axis 7. The axis 7 is located at the top side of the opening 5 and at the height of the top side of the ventilator unit 4. The shutter 6 is preferably wider than the ventilator unit 4. In the turned position of the shutter 6, a barrier portion 8 of the shutter 6 impedes the supply of air from the greenhouse, while outside air is drawn in by the ventilator unit 4 and introduced into the greenhouse via the duct 2. In order to introduce outside air into the greenhouse effectively and quickly enough, the discharge surface area is enlarged in accordance with the invention. In the embodiment described here, this occurs by opening a second shutter 9, which under normal operational conditions closes off the end of duct 2 furthest removed from the ventilator unit. In the open condition, the flow resistance in the duct 2 is reduced, which facilitates the inlet of outside air. In the embodiment shown, the surface area is enlarged by the diameter of the duct 2, that is to say by 63 %. The extent to which the shutter 9 is opened may be adjustable, which especially in a semiclosed greenhouse affords more possibilities for the regulation of the climate in the greenhouse 1.

The air from the greenhouse 1 is removed via an outlet opening 10, which outlet opening during normal operation is closed off by means of a shutter 11.

## Claims

1. A method for the forced removal of warm and/or humid air from a greenhouse (1), which greenhouse (1) is provided with
- a closable outlet opening (10) for the discharge of said warm and/or humid air,
- a closable inlet opening (5) for the supply of outside air,
- a ventilator unit (4), and
- a duct (2) connected to the ventilator unit (4) and extending into the greenhouse (1), which duct (2) is over its length provided with openings (3)
wherein during normal operation of the greenhouse (1) the ventilator unit (4) is employed to cause air in the greenhouse (1) to circulate, in order to maintain desirable climate conditions in the greenhouse (1) and
- for the forced removal of warm and/or humid air the closable inlet opening (5) and the closable outlet opening (10) are opened,
- with the aid of the ventilator unit (4), outside air is introduced into the greenhouse (1) via the inlet opening (5) and via the duct (2) in the greenhouse (1), thus expelling the warm and/or humid air from the greenhouse (1) through the opened outlet opening (10),
**characterised in that** the duct (2) downstream in relation to the ventilator unit (4) is provided with at least one passage opening that can be opened, and that for the purpose of removing warm and/or humid air, the passage opening(s) that can be opened are opened so as to increase the total area of openings (3) in the duct (2) and the open passage opening(s) by at least 20 % compared with the area of solely the openings (3) in the duct (2) during normal operation.

2. A method according to claim 1, **characterised in that** the end of the duc (2) furthest removed from the ventilator unit (4) is provided with a shut-off member (9), which shut-off member (9) is opened for the forced removal of said warm and/or humid air.

3. A method according to claim 1 or 2, **characterised in that** the outlet opening (10) and the inlet opening (5) of the (semi)closed green house (1) are simultaneously opened by a mechanical coupling between respective shut-off elements (11; 6).

4. A method according to one of the preceding claims, **characterised in that** the ventilator unit (4) is positioned near but at a distance from a wall of the greenhouse (1) and the inlet opening (5) is provided with a shut-off element (6), wherein for the forced removal of said warm and/or humid air, the shut-off element (6) is moved from a first position closing off the inlet opening (5) to a second position unblocking the inlet opening (5), in which second position of the shut-off element (6) the flow of air from the greenhouse (1) to the ventilator unit (4) is impeded, and outside air is introduced through the ventilator unit (4) via the duct (2) into the greenhouse (1).

5. A method according to claim 4, **characterised in that** the inlet opening (5) is located in the side wall of the greenhouse (1), the shut-off element (6) is a plate (6) rotatable about a horizontal axis, wherein for the forced removal of said warm and/or humid air the plate (6) is moved from a first relatively vertical position closing off the inlet opening (5), to a second relatively horizontal position unblocking the opening (5) such that the distal end (8) of the plate (6) is at the height of the top side of the ventilator unit (4) and thus impedes the flow of air from the greenhouse (1) to the ventilator unit (4), and outside air is introduced through the ventilator unit (4) via the duct (2) into the greenhouse (1).

6. A method according to one of the claims 1 to 5, **characterised in that** for the forced removal of the said warm and/or humid air, the ventilator of the ventilator unit (4) is turned from a first position, in which the ventilator unit (4) draws in air from the greenhouse (1) to a second position, in which the ventilator unit (4) draws in air from outside the greenhouse (1).

7. A method according to claim 6, **characterised in that** the ventilator unit (4) and the duct (2) are connected via a flexible duct section, which duct section by turning the ventilator unit (4) from a first to a second position is bent, thereby ensuring that outside air is supplied via the duct (2) into the greenhouse (1).

8. A method according to one of the claims 1 to 3, **characterised in that** for the forced removal of the said warm and/or humid air, the ventilator of the ventilator unit (4) is turned from a first position, in which the ventilator unit (4) draws in air from the greenhouse (1) to a second position, in which the ventilator unit (4) draws in air from outside the greenhouse (1).

9. A method according to claim 8, **characterised in that** the ventilator unit (4) and the duct (2) are connected via a flexible duct section, wherein by sliding the ventilator unit (4) from a first to a second position, the duct section is extended to ensure that outside air is supplied via the duct (2) into the greenhouse (1).

10. A method according to one of the claims, **characterised in that** during normal operation at least one element selected from i) the ventilator, and ii) a shut-off element (6; 11) for an inlet opening (5) or outlet opening (10) is in a condition with high potential energy, and that for the forced removal of warm and/or humid air a safeguard is removed, and the force of gravity causes the element (6; 11) to be turned or moved.

11. A method according to one of the preceding claims, **characterised in that** the inlet opening (5) is provided with means for preventing the entry of organisms that might constitute a pest.

## Patentansprüche

1. Verfahren zum erzwungenen Entziehen warmer und/oder feuchter Luft aus einem Gewächshaus (1), wobei dieses Gewächshaus (1) ausgestattet ist mit
- einer schließbaren Auslassöffnung (10) zum Ausstoßen der warmen und/oder feuchten Luft,
- einer schließbaren Einlassöffnung (5) zur Zufuhr von Außenluft,
- einer Ventilatoreinheit (4), und
- einem Luftkanal (2), verbunden mit der Ventilatoreinheit (4) und sich in das Gewächshaus (1) erstreckend, wobei dieser Luftkanal (2) über seine Länge mit Öffnungen (3) versehen ist,
wobei die Ventilatoreinheit (4) während des normalen Betriebs des Gewächshauses (1) verwendet wird, um zu bewirken, dass Luft im Gewächshaus (1) zirkuliert, um eine wünschenswerte Klimabeschaffenheit im Gewächshaus (1) aufrecht zu erhalten, und
- zum erzwungenen Entziehen warmer und/oder feuchter Luft die schließbare Einlassöffnung (5) und die schließbare Auslassöffnung (10) geöffnet werden,
- mit der Hilfe der Ventilatoreinheit (4) Außenluft über die Einlassöffnung (5) und durch den Luftkanal (2) im Gewächshaus (1) in das Gewächshaus (1) eingebracht wird, wodurch auf diese Weise die warme und/oder feuchte Luft durch die geöffnete Auslassöffnung (10) aus dem Gewächshaus (1) ausgestoßen wird,
**dadurch gekennzeichnet, dass** der in Bezug auf die Ventilatoreinheit (4) flussabwärts angeordnete Luftkanal (2) mit mindestens einer Durchlassöffnung ausgestattet ist, die geöffnet werden kann, und dass für den Zweck, warme und/oder feuchte Luft zu entfernen, die Durchlassöffnung(en), die geöffnet werden kann (können), geöffnet wird (werden), um so die gesamte Fläche von Öffnungen (3) im Luftkanal (2) und der offenen Durchlassöffnung(en) um mindestens 20 % zu erhöhen im Vergleich mit der Fläche von nur den Öffnungen (3) im Luftkanal (2) während des normalen Betriebs.

2. Verfahren nach Anspruch 1, **dadurch gekennzeichnet, dass** das am weitesten von der Ventilatoreinheit (4) entfernte Ende das Luftkanals (2) mit einem Absperrelement (9) ausgestattet ist, wobei dieses Absperrelement (9) zum erzwungene Entziehen der warmen und/oder feuchten Luft geöffnet wird.

3. Verfahren nach Anspruch 1 oder 2, **dadurch gekennzeichnet, dass** die Auslassöffnung (10) und die Einlassöffnung (5) des (halb-) geschlossenen Gewächshauses (1) durch eine mechanische Verbindung zwischen den entsprechenden Absperrelementen (11; 6) gleichzeitig geöffnet werden.

4. Verfahren entsprechend einem der vorangegangenen Ansprüche, **dadurch gekennzeichnet, dass** die Ventilatoreinheit (4) nahe an, aber in einem Abstand von einer Wand des Gewächshauses (1) angeordnet ist, und die Einlassöffnung (5) mit einem Absperrelement (6) ausgestattet ist, wobei zum erzwungenen Entziehen der warmen und/oder feuchten Luft das Absperrelement (6) aus einer ersten Position, die die Einlassöffnung (5) absperrt, in eine zweite Position bewegt wird, die die Einlassöffnung (5) freigibt, wobei in dieser zweiten Position des Absperrelements (6) der Fluss von Luft von dem Gewächshaus (1) zur Ventilatoreinheit (4) verhindert wird, und Außenluft durch die Ventilatoreinheit (4) durch den Luftkanal (2) in das Gewächshaus (1) eingebracht wird.

5. Verfahren nach Anspruch 4, **dadurch gekennzeichnet, dass** die Einlassöffnung (5) in der Seitenwand des Gewächshauses (1) angeordnet ist, das Absperrelement (6) eine über eine waagerechte Achse drehbare Platte (6) ist, wobei zum erzwungenen Entziehen der warmen und/oder feuchten Luft die Platte (6) aus einer ersten relativ vertikalen Position, die die Einlassöffnung (5) absperrt, in eine zweite relativ waagerechte Position bewegt wird, die die Öffnung (5) freigibt, so dass das distale Ende (8) der Platte (6) sich auf der Höhe der oberen Seite der Ventilatoreinheit (4) befindet und auf diese Weise den Fluss der Luft vom Gewächshaus (1) zur Ventilatoreinheit (4) verhindert, und Außenluft durch die Ventilatoreinheit (4) durch den Luftkanal (2) in das Gewächshaus (1) eingebracht wird.

6. Verfahren entsprechend einem der Ansprüche 1 bis 5, **dadurch gekennzeichnet, dass** zum erzwungenen Entziehen der warmen und/oder feuchten Luft der Ventilator der Ventilatoreinheit (4) aus einer ersten Position, in der die Ventilatoreinheit (4) Luft vom Gewächshaus (1) ansaugt, in eine zweite Position gedreht wird, in der die Ventilatoreinheit (4) Luft von außerhalb des Gewächshauses (1) ansaugt.

7. Verfahren nach Anspruch 6, **dadurch gekennzeichnet, dass** die Ventilatoreinheit (4) und der Luftkanal (2) durch einen flexiblen Luftkanalabschnitt verbunden sind, wobei der Luftkanalabschnitt durch Drehen der Ventilatoreinheit (4) von einer ersten zu einer zweiten Position gebogen wird, wodurch sichergestellt wird, dass Außenluft durch den Luftkanal (2) in dass Gewächshaus (1) zugeführt wird.

8. Verfahren entsprechend einem der Ansprüche 1 bis 3, **dadurch gekennzeichnet, dass** zum erzwungenen Entziehen der warmen und/oder feuchten Luft der Ventilator der Ventilatoreinheit (4) aus einer ersten Position, in der die Ventilatoreinheit (4) Luft vom Gewächshaus (1) ansaugt, in eine zweite Position gedreht wird, in der die Ventilatoreinheit (4) Luft von außerhalb des Gewächshauses (1) ansaugt.

9. Verfahren nach Anspruch 8, **dadurch gekennzeichnet, dass** die Ventilatoreinheit (1) und der Luftkanal (2) durch einen flexiblen Luftkanalabschnitt verbunden sind, wobei durch Schieben der Ventilatoreinheit (4) von einer ersten in eine zweite Position der Luftkanalabschnitt verlängert wird, um sicherzustellen, dass Außenluft durch den Luftkanal (2) in das Gewächshaus (1) zugeführt wird.

10. Verfahren entsprechend einem der Ansprüche, **dadurch gekennzeichnet, dass** während des normalen Betriebs mindestens ein Element, ausgewählt aus i) dem Ventilator und ii) einem Absperrelement (6; 11) für eine Einlassöffnung (5) oder Auslassöffnung (10) in einem Zustand mit hoher potentieller Energie ist, und dass zum erzwungenen Entziehen warmer und/oder feuchter Luft eine Schutzvorrichtung entfernt wird, und die Kraft der Schwerkraft bewirkt, dass das Element (6; 11) gedreht oder bewegt wird.

11. Verfahren entsprechend einem der vorangegangenen Ansprüche, **dadurch gekennzeichnet, dass** die Einlassöffnung (5) mit Mitteln dafür ausgestattet ist, den Eintritt von Organismen zu verhindern, die eine Pflanzenschädigung erzeugen könnten.

## Revendications

1. Procédé pour l'élimination forcée d'air chaud et/ou humide d'une serre (1), laquelle serre (1) est pourvue
- d'une ouverture (10) de sortie pouvant être fermée permettant l'évacuation dudit air chaud et/ou humide,
- d'une ouverture (5) d'entrée pouvant être fermée permettant l'alimentation en air extérieur,
- d'un module (4) de ventilateur, et
- d'un conduit (2) raccordé au module (4) de ventilateur et s'étendant dans la serre (1), lequel le conduit (2) est doté, sur sa longueur, d'ouvertures (3)
dans lequel, pendant un fonctionnement normal de la serre (1), le module (4) de ventilateur est employé pour provoquer une circulation d'air dans la serre (1) afin de maintenir des conditions climatiques souhaitables dans la serre (1), et
- pour l'élimination forcée d'air chaud et/ou humide, on ouvre l'ouverture (5) d'entrée pouvant être fermée et l'ouverture (10) de sortie pouvant être fermée,
- à l'aide du module (4) de ventilateur, on introduit de l'air extérieur dans la serre (1) via l'ouverture (5) d'entrée et via le conduit (2) situé dans la serre (1), en expulsant ainsi l'air chaud et/ou humide de la serre (1) par l'intermédiaire de l'ouverture (10) de sortie ouverte,
**caractérisé en ce que** le conduit (2), dans la direction vers l'aval par rapport au module (4) de ventilateur, est pourvu d'au moins une ouverture de passage que l'on peut ouvrir, et **en ce que**, à des fins d'éliminer l'air chaud et/ou humide, l'ouverture ou les ouvertures de passage qui peuvent être ouvertes sont ouvertes de façon à augmenter d'au moins 20 % la superficie totale d'ouvertures (3) dans le conduit (2) et de la ou des ouvertures de passage ouvertes par comparaison avec la superficie constituée seulement par les ouvertures (3) du conduit (2) en fonctionnement normal.

2. Procédé selon la revendication 1, **caractérisé en ce que** l'extrémité du conduit (2) la plus éloignée du module (4) de ventilateur est pourvue d'un élément (9) d'obturation, lequel élément (9) d'obturation est ouvert pour l'élimination forcée dudit air chaud et/ou humide.

3. Procédé selon la revendication 1 ou 2, **caractérisé en ce que** l'ouverture (10) de sortie et l'ouverture (5) d'entrée de la serre (semi) fermée (1) sont simultanément ouvertes par un accouplement mécanique entre des éléments (11 ; 6) d'obturation respectifs.

4. Procédé selon l'une des revendications précédentes, **caractérisé en ce que** le module (4) de ventilateur est positionné à proximité, mais à une certaine distance, d'une paroi de la serre (1), et l'ouverture (5) d'entrée est pourvue d'un élément (6) d'obturation, dans lequel, pour l'élimination forcée dudit air chaud et/ou humide, l'élément (6) d'obturation est amené d'une première position fermant l'ouverture (5) d'entrée à une seconde position débouchant l'ouverture (5) d'entrée, dans laquelle seconde position de l'élément (6) d'obturation, l'écoulement d'air de la serre (1) vers le module (4) de ventilateur est empêché, et de l'air extérieur est introduit à travers le module (4) de ventilateur via le conduit (2) dans la serre (1).

5. Procédé selon la revendication 4, **caractérisé en ce que** l'ouverture (5) d'entrée est située dans la paroi latérale de la serre (1), l'élément (6) d'obturation est une plaque (6) pouvant tourner autour d'un axe horizontal, dans lequel, pour l'élimination forcée dudit air chaud et/ou humide, la plaque (6) est amenée d'une première position relativement verticale fermant l'ouverture (5) d'entrée à une seconde position relativement horizontale débouchant l'ouverture (5) de sorte que l'extrémité distale (8) de la plaque (6) est à la hauteur du côté supérieur du module (4) de ventilateur et empêche ainsi l'écoulement d'air de la serre (1) vers le module (4) de ventilateur, et l'air extérieur est introduit à travers le module (4) de ventilateur via le conduit (2) dans la serre (1).

6. Procédé selon l'une des revendications 1 à 5, **caractérisé en ce que**, pour l'élimination forcée de l'air chaud et/ou humide, le ventilateur du module (4) de ventilateur est tourné d'une première position, dans laquelle le module (4) de ventilateur aspire de l'air de la serre (1), à une seconde position dans laquelle le module (4) de ventilateur aspire de l'air de l'extérieur de la serre (1).

7. Procédé selon la revendication 6, **caractérisé en ce que** le module (4) de ventilateur et le conduit (2) sont raccordés via une section de conduit souple, laquelle section de conduit, par pivotement du module (4) de ventilateur d'une première position à une seconde position, fléchit, en garantissant ainsi le fait que de l'air extérieur est délivré via le conduit (2) dans la serre (1).

8. Procédé selon l'une des revendications 1 à 3, **caractérisé en ce que**, pour l'élimination forcée de l'air chaud et/ou humide, le ventilateur du module (4) de ventilateur est pivoté d'une première position, dans laquelle le module (4) de ventilateur aspire de l'air de la serre (1), à une seconde position dans laquelle le module (4) de ventilateur aspire de l'air de l'extérieur de la serre (1).

9. Procédé selon la revendication 8, **caractérisé en ce que** le module (4) de ventilateur et le conduit (2) sont raccordés via une section de conduit souple, dans lequel, en faisant glisser le module (4) de ventilateur d'une première position à une seconde position, la section de conduit se déploie pour garantir le fait que de l'air extérieur soit délivré via le conduit (2) dans la serre (1).

10. Procédé selon l'une des revendications précédentes, **caractérisé en ce que**, en fonctionnement normal, au moins un élément, choisi à partir i) du ventilateur, et ii) d'un élément (6 ; 11) d'obturation d'une ouverture (5) d'entrée ou d'une ouverture (10) de sortie, est dans un état d'énergie à haut potentiel, et **en ce que**, pour l'élimination forcée de l'air chaud et/ou humide, une sécurité est retirée, et la force de gravité amène l'élément (6 ; 11) à pivoter ou bouger.

11. Procédé selon l'une des revendications précédentes, **caractérisé en ce que** l'ouverture (5) d'entrée est pourvue d'un moyen empêchant l'entrée d'organismes qui pourraient constituer un danger pour les cultures.
